# EUROPÄISCHE PATENTANMELDUNG

(11) **EP 4 745 521 A1**
(43) Veröffentlichungstag der Anmeldung: **20.05.2026**
(21) Anmeldenummer: 25216143.5
(22) Anmeldetag: 17.11.2025
(51) Int. Cl.: G01C 19/58, G21K 1/00, H05H 3/02

(54) **VERFAHREN ZUR STEUERUNG EINES ATOMINTERFEROMETERS, ATOMINTERFEROMETER UND COMPUTERPROGRAMM**

(30) Priorität: 19.11.2024 DE 102024133876
(71) Anmelder: Deutsches Zentrum für Luft- und Raumfahrt e.V., 53227 Bonn-Oberkassel (DE)
(72) Erfinder: Gerlach, Sandra, 30559 Hannover (DE); Deppner, Christian, 30453 Hannover (DE); Herr, Waldemar, 30625 Hannover (DE); Schubert, Christian, 30167 Hannover (DE); Ahlers, Holger, 30167 Hannover (DE)
(74) Vertreter: Günther, Constantin

(57) **Zusammenfassung**

Die Erfindung betrifft ein Verfahren, bei dem wenigstens ein Ensemble von Atomen in einem Auskoppelzustand (Z1) präpariert wird und mittels des wenigstens einen Ensembles von Atomen in einem zum Auskoppelzustand (Z1) gleichen oder nach Anwendung von weiteren Manipulationsschritten verschiedenen Atominterferometereingangszustand durch auf das wenigstens eine Ensemble von Atomen einwirkende kohärente Kontrolleingriffe deren Zustand in von dem Atominterferometereingangszustand verschiedene Folgezustände geändert wird und mit dem wenigstens einen Ensemble von Atomen eine Materiewelleninterferometriesequenz durchgeführt wird, die insbesondere mehrere Schleifen aufweisen kann. Die Erfindung betrifft außerdem ein Atominterferometer, das zur Ausführung eines solchen Verfahrens eingerichtet ist, sowie ein Computerprogramm zur Ausführung eines solchen Verfahrens.

## Beschreibung

Die Erfindung betrifft ein Verfahren, bei dem wenigstens ein Ensemble von Atomen in einem Auskoppelzustand (Z1) präpariert wird und mittels des wenigstens einen Ensembles von Atomen in einem zum Auskoppelzustand (Z1) gleichen oder nach Anwendung von weiteren Manipulationsschritten verschiedenen Atominterferometereingangszustand durch auf das wenigstens eine Ensemble von Atomen einwirkende kohärente Kontrolleingriffe deren Zustand in von dem Atominterferometereingangszustand verschiedene Folgezustände geändert wird und mit dem wenigstens einen Ensemble von Atomen eine Materiewelleninterferometriesequenz durchgeführt wird, die insbesondere mehrere Schleifen aufweisen kann. Die Erfindung betrifft außerdem ein Atominterferometer, das zur Ausführung eines solchen Verfahrens eingerichtet ist, sowie ein Computerprogramm zur Ausführung eines solchen Verfahrens.

Sensoren auf Basis der Atominterferometrie können hochsensitive, langzeitstabile und absolutgenaue Messungen z.B. von Beschleunigungen und Rotationen bieten. Sowohl atominterferometrische Rotationsmessungen als auch Beschleunigungsmessungen, insbesondere in Gravimetern, wurden demonstriert. Von atominterferometrischen Gravimetern existieren kommerzielle Versionen, sowie auch transportable Versionen, die in See- und Fluggravimetriekampagnen eingesetzt wurden. Eine Herausforderung ist dabei die Umsetzung kompakter Aufbauten.

### Veröffentlichungen:

R1: Atom-Chip Fountain Gravimeter
   S. Abend, M. Gebbe, M. Gersemann, H. Ahlers, H. Müntinga, E. Giese, N. Gaaloul, C. Schubert, C. Lämmerzahl, W. Ertmer, W. P. Schleich, and E. M. Rasel Phys. Rev. Lett. 117, 203003 - Published 11 November 2016
R2: A transportable quantum gravimeter employing delta-kick collimated Bose-Einstein condensates Nina Heine, Jonas Matthias, Maral Sahelgozin, Waldemar Herr, Sven Abend, Ludger Timmen, Jürgen Müller & Ernst Maria Rasel Published: 25 August 2020
R3: Multi-loop atomic Sagnac interferometry Christian Schubert, Sven Abend, Matthias Gersemann, Martina Gebbe, Dennis Schlippert, Peter Berg & Ernst M. Rasel Published: 09 August 2021
R4: Composite-Light-Pulse Technique for High-Precision Atom Interferometry P. Berg, S. Abend, G. Tackmann, C. Schubert, E. Giese, W. P. Schleich, F. A. Narducci, W. Ertmer, and E. M. Rasel Published 9 February 2015

Der Erfindung liegt die Aufgabe zugrunde, ein solches Atominterferometer im Hinblick auf eine vorteilhafte praktische bauliche Realisierung zu optimieren.

Diese Aufgabe wird bei einem eingangs erläuterten Verfahren zur Steuerung eines Atominterferometers unter Zugrundelegung eines kartesischen Koordinatensystems mit den Achsen x, y und z, wobei bei Betrieb des Atominterferometers in einem Gravitationsfeld beispielsweise die z-Achse in Wirkrichtung der Gravitation ausgerichtet sein kann, dadurch gelöst, dass das wenigstens eine Ensemble von Atomen von einer Ausgangsposition in eine erste Richtung bewegt wird, die eine räumliche Komponente in der x-y-Ebene hat, wobei folgende Schritte ausgeführt werden:
a) nach Zurücklegung eines Wegs in der ersten Richtung bis zu einem ersten Umkehrpunkt wird das wenigstens eine Ensemble von Atomen durch Bestrahlung mit wenigstens einem ersten kohärenten Relaunch-Kontrolleingriff mit in einer zur ersten Richtung veränderten zweiten Richtung bewegt, die ebenfalls eine räumliche Komponente in der x-y-Ebene hat,
b) nach Zurücklegung eines Wegs in der zweiten Richtung wird das wenigstens eine Ensemble von Atomen durch Bestrahlung mit wenigstens einem zweiten kohärenten Relaunch-Kontrolleingriff in Richtung der Umgebung des ersten Umkehrpunkts bewegt, sodass das wenigstens eine Ensemble von Atomen eine schleifenförmige Trajektorie in der x-y-Ebene hat,
c) Hin- und Herbewegungen des wenigstens einen Ensembles von Atomen mit schleifenförmiger Trajektorie in der x-y-Ebene werden mittels weiterer kohärenter Relaunch-Kontrolleingriffe wiederholt, bis eine vorgegebene Zahl Hin- und Herbewegungen des wenigstens einen Ensembles von Atomen erreicht ist,
d) Abschließen der Interferometriesequenz durch Bestrahlung des wenigstens einen Ensembles von Atomen mit wenigstens einem abschließenden kohärenten Kontrolleingriff und Detektion der Interferometerausgänge.

Auf diese Weise kann unabhängig von einem Gravitationsfeld eine vorteilhafte Mehrschleifen-Geometrie in der x-y-Ebene realisiert werden. Durch die Mehrschleifen-Geometrie kann bei geringem Bauraum des Atominterferometers eine hohe Messgenauigkeit und Auflösung der Interferometrie realisiert werden. Dies wird dadurch möglich, dass das wenigstens eine Ensemble von Atomen im Laufe der Interferometriesequenz nicht nur in ein und dieselbe Raumrichtung bewegt wird und dementsprechend zur Erreichung einer hohen Auflösung ein relativ großer Bauraum benötigt wird, sondern schleifenartig mehrfach hin- und herbewegt wird, wobei die Zahl der Hin- und Herbewegungen, d.h. der Schleifen oder schleifenförmigen Trajektorien, im jeweiligen Anwendungsfall festgelegt werden kann. Dies ermöglicht eine variable Skalierung eines Atominterferometers. Insbesondere kann ein solches Atominterferometer als kompakter, transportabler atominterferometrischer Sechsachsen- bzw. Mehrachsen-Inertialsensor realisiert werden, auch mit der Möglichkeit für Rotationsmessungen.

Der Skalierungsfaktor typischer Atominterferometer mit Atomen im freien Fall hängt von der effektiven Wellenzahl des Strahlteilerlichtfeldes ab, das für die kohärente Manipulation der Atome zur Formung des Interferometers benötigt wird, sowie von der Freifallzeit bzw. freien Entwicklungszeit zwischen aufeinanderfolgenden Strahlteilerpulsen während des Interferometers. Diese Zeit wird durch die Größe der Vakuumkammer, in der die Atome gefangen und manipuliert werden, begrenzt. Als Lösungsansätze gibt es die Möglichkeiten gefangener bzw. geführter Interferometer, was zusätzliche Anforderungen an den Aufbau beinhaltet.

Bei der vorliegenden Erfindung wird im Unterschied dazu das Zurückwerfen ("relaunch") der Atome nach einer gewissen Zeit genutzt, sodass die Atome die Vakuumkammer mehrfach durchlaufen. Auf diesem Ansatz aufbauend wird ein Konzept für einen Rotationssensor vorgeschlagen, bei dem durch wiederholtes Zurückwerfen der Atome eine eingeschlossene Fläche mehrfach umlaufen wird, wodurch die effektiv eingeschlossene Fläche erhöht und damit analog zu einem Fasergyroskop der Skalierungsfaktor gesteigert wird. Dieses Mehrschleifenkonzept ("multi loop") kann erdgebunden prinzipiell wenigstens eine der drei Raumachsen vermessen.

Vorteilhafterweise kann durch das erfindungsgemäße Verfahren, im Unterschied zum Stand der Technik, sowohl im Gravitationsfeld mit Atomen im freien Fall als auch im schwerelosen Raum eine Vermessung von Rotationsbewegungen um wenigstens eine, mehrere oder alle drei Raumachsen erfolgen. Insbesondere wird beim erfindungsgemäßen Verfahren keine gravitative Beschleunigung zum Aufspannen von Interferometerflächen bzw. -schleifen benötigt.

Dementsprechend kann das erfindungsgemäße Verfahren sowie das Verfahren ausführende Atominterferometer wahlweise in einem Gravitationsfeld, z.B. im Erdschwerefeld, oder im schwerelosen Raum eingesetzt werden. Bei Betrieb des Atominterferometers in einem Gravitationsfeld soll die z-Achse in Wirkrichtung der Gravitation ausgerichtet sein, bei Schwerelosigkeit ist die Ausrichtung irrelevant. Beim erfindungsgemäßen Verfahren werden vorteilhaft räumliche Bewegungen des Ensembles von Atomen in der x-y-Ebene, die nachfolgend auch als Horizontalebene oder horizontale Richtung bezeichnet wird, zum Aufspannen von Interferometerflächen bzw. -schleifen genutzt. Eine Beeinflussung der räumlichen Bewegungen des Ensembles wird durch die kohärenten Relaunch-Kontrolleingriffe ermöglicht, durch die die Richtung des Ensembles von Atomen in der horizontalen Richtung und/oder auch in vertikaler Richtung (z-Richtung) invertiert wird.

Das zuvor genannte Ensemble von Atomen, das in der Literatur zum Teil auch als Atomensemble oder Atomwolke bezeichnet wird, kann auch als Materiewelle(n) oder als Atome beschrieben werden, die sich in einem kohärenten Superpositionszustand befinden. Als allgemeiner Oberbegriff soll in dieser Anmeldung hierfür der Ausdruck "Ensemble von Atomen" verwendet werden.

Das Ensemble von Atomen befindet sich zu Beginn in einem Auskoppelzustand (Z1), wobei der Auskoppelzustand (Z1) den Zustand nach Kühlverfahren und / oder anderen Präparationsschritten oder allgemein den Zustand vor den nun folgenden Schritten beschreibt, der insbesondere vor der Durchführung weitere Kontrolleingriffe und der kohärenten Kontrolleingriffe der Materiewelleninterferometriesequenz vorliegt. Das Ensemble von Atomen wird dann durch die erwähnten Kontrolleingriffe in den Atominterferometereingangszustand überführt, z.B. indem auf das Ensemble von Atomen mit wenigstens einem Impulsübertrag eingewirkt wird und/oder gegebenenfalls weitere Präparationsschritte durchgeführt werden. Es wird dann die Materiewelleninterferometriesequenz mit mehreren kohärenten Kontrolleingriffen durchgeführt, in der das Ensemble von Atomen einen oder mehrere voneinander verschiedene Folgezustände haben kann, z.B. ab dem ersten bis zum letzten kohärenten Kontrolleingriff.

Solche kohärenten Kontrolleingriffe können z.B. die Abgabe von Lichtpulsen, z.B. von einem Laser oder einer anderen Lichtquelle, Magnetfeldgradienten und/oder Mikrowellenpulsen auf das wenigstens eine Ensemble von Atomen sein, oder allgemein gesagt beliebige Methoden zur kohärenten Manipulation des Ensembles von Atomen, also eine Form der Quantenkontrolle, die die Welleneigenschaften von Materie nutzt, um die zeitliche Entwicklung eines Quantensystems auf eine gewünschte Art und Weise zu steuern. Im Laufe der Materiewelleninterferometriesequenz werden in der Regel mehrere kohärente Kontrolleingriffe durchgeführt. Der Begriff "Puls" wird als Oberbegriff für beliebige Arten von periodischen und nicht-periodischen Ereignissen verstanden, wobei der Begriff "Puls" auch einen Impuls erfasst, z.B. in Form einer sich periodisch wiederholenden Abfolge von Impulsen, sich periodisch wiederholenden impuls- oder stoßartigen Ereignissen und/oder im Falle eines Lichtpulses ein zeitlich einmalig oder mehrmalig auftretendes Auf- und Abschwellen der Lichtleistung.

Gemäß einer vorteilhaften Ausgestaltung der Erfindung ist vorgesehen, dass die kohärenten Superpositionszustände der Atome, z.B. durch das wenigstens eine Ensemble von Atomen auf schleifenförmigen Trajektorien eine Fläche umschließen, die eine räumliche Komponente in Richtung der x-Achse und der y-Achse hat. Auf diese Weise wird eine horizontale Fläche umschlossen. Dies ermöglicht es, dass ein das erfindungsgemäße Verfahren ausführende Atominterferometer ohne Änderungen wahlweise in einem Gravitationsfeld oder im schwerelosen Raum eingesetzt werden kann.

Gemäß einer vorteilhaften Ausgestaltung der Erfindung ist vorgesehen, dass die kohärenten Superpositionszustände der Atome auf schleifenförmigen Trajektorien eine Mehrschleifen-Geometrie bilden. Insbesondere kann das wenigstens eine Ensemble von Atomen mehrere Umläufe der schleifenförmigen Trajektorien zurücklegen, z.B. zwei, drei, vier oder mehr Schleifen.

Gemäß einer vorteilhaften Ausgestaltung der Erfindung ist vorgesehen, dass die kohärenten Superpositionszustände bei den Hin- und Herbewegungen mit wenigstens einem kohärenten Ablenk-Kontrolleingriff bestrahlt werden, dessen Wirkrichtung in einen von Null verschiedenen Winkel, z.B. orthogonal, zur Wirkrichtung der kohärenten Relaunch-Kontrolleingriffe ist. Durch solche Ablenk-Kontrolleingriffe wird eine umfassende Kontrolle der zurückgelegten Trajektorien des wenigstens einen Ensembles von Atomen in horizontaler Richtung ermöglicht. Beispielsweise können die Relaunch-Kontrolleingriffe in positiver und negativer x-Richtung wirken, die kohärenten Ablenk-Kontrolleingriffe in positiver und negativer y-Richtung. Als Wirkrichtung des jeweiligen kohärenten Kontrolleingriffs wird dabei die Richtung des Vektors des Impulsübertrags auf das wenigstens eine Ensemble von Atomen angesehen.

Gemäß einer vorteilhaften Ausgestaltung der Erfindung ist vorgesehen, dass die Wirkrichtung der kohärenten Relaunch-Kontrolleingriffe und/oder die Wirkrichtung der kohärenten Ablenk-Kontrolleingriffe wenigstens eine räumliche Komponente in Richtung der x-Achse und/oder der y-Achse hat. Eine oder beide Arten der genannten kohärenten Kontrolleingriffe können somit wenigstens eine räumliche Komponente ihrer Wirkrichtung in horizontaler Richtung haben.

Gemäß einer vorteilhaften Ausgestaltung der Erfindung ist vorgesehen, dass die kohärenten Superpositionszustände der Atome auf ihrer Bewegung in der ersten und zweiten Raumrichtung nicht ausschließlich geführt sind. Die Erfindung ist somit auch bei nicht-geführten Interferometern einsetzbar, bei denen sich das wenigstens eine Ensemble von Atomen im Wesentlichen frei bewegen kann, d.h. nicht gezielt geführt ist.

Gemäß einer vorteilhaften Ausgestaltung der Erfindung ist vorgesehen, dass die Zustände der Atome des wenigstens einen Ensembles von Atomen durch wenigstens einen auf das wenigstens eine Ensemble von Atomen einwirkenden kohärenten Strahlteiler-Kontrolleingriff derart geändert werden, dass ihr Zustand wenigstens zwei Teilaufenthaltswahrscheinlichkeiten der Atome mit unterschiedlichem Impuls aufweist, wobei die Komponenten der unterschiedlichen Impulse voneinander abgewandte Richtungskomponenten aufweisen, die jeweils eine räumliche Komponente in der x-y-Ebene haben, wobei dann Kontrolleingriffe zur Zustandsänderung in den Atominterferometereingangszustand angewandt werden können, wobei dann die Materiewelleninterferometriesequenz angewandt wird, wobei die zuvor genannten Schritte a) bis d) auf die jeweiligen Teilaufenthaltswahrscheinlichkeiten der Atome angewandt werden. Dies ermöglicht die Realisierung wenigstens zweier Interferometer mittels des einen Ensembles von Atomen, in dem der erwähnte kohärente Strahlteiler-Kontrolleingriff durchgeführt wird, durch die die wenigstens zwei Teilaufenthaltswahrscheinlichkeiten der Atome mit unterschiedlichem Impuls erzeugt werden, also sozusagen zwei unabhängige Teil-Ensembles von Atomen. Die beiden hierdurch erzeugten Interferometer können somit jeweils separat hinsichtlich ihrer Interferometerausgänge ausgewertet werden. Auf diese Weise kann die Erfindung vorteilhaft auf Beschleunigungsmessungen und Rotationsmessungen aller Art erweitert werden, ohne dass der Bauraum wesentlich vergrößert werden muss.

Als Interferometerausgänge werden dabei die Zustände des Ensembles von Atomen bzw. dessen Teilaufenthaltswahrscheinlichkeiten zum Ende der Materiewelleninterferometriesequenz verstanden, an dem die Interferenz von Wellen gemessen werden kann. Beispielsweise kann hierfür eine Kamera verwendet werden, die durch ein Schauglas in eine Vakuumkammer des Atominterferometers schauen kann und hierbei die Ensembles von Atomen detektieren und auswerten kann.

In einer vorteilhaften Ausgestaltung der Erfindung können die wenigstens zwei Teilaufenthaltswahrscheinlichkeiten der Atome mit unterschiedlichem Impuls Hin- und Herbewegungen ausführen und dabei schleifenförmige Trajektorien umschließen, wobei die Bewegungsrichtungen der Teilaufenthaltswahrscheinlichkeiten auf ihren Trajektorien entgegengesetzt zueinander sein kann, z.B. indem die Teilaufenthaltswahrscheinlichkeiten mit ihren gegenläufigen Bewegungen jeweils eine Fläche umschließen, die eine räumliche Komponente in Richtung der x-Achse und der y-Achse hat (also eine horizontale Fläche).

Gemäß einer vorteilhaften Ausgestaltung der Erfindung ist vorgesehen, dass eine symmetrische oder quasi-symmetrische Strahlteilung des wenigstens einen Ensembles von Atomen in die wenigstens zwei Teilaufenthaltswahrscheinlichkeiten der Atome in Richtung der x-Achse und der y-Achse durchgeführt wird. Im Falle einer symmetrischen Strahlteilung kann die Wirkrichtung des kohärenten Strahlteiler-Kontrolleingriffs im Wesentlichen orthogonal zur anfänglichen Geschwindigkeit des wenigstens einen Ensembles von Atomen erfolgen. Bei der quasi-symmetrischen Strahlteilung kann die Wirkrichtung nicht orthogonal sein, sodass sich ein symmetrisierter Verlauf der Trajektorien ergibt.

Gemäß einer vorteilhaften Ausgestaltung der Erfindung ist vorgesehen, dass symmetrische oder symmetrisierte bzw. quasi-symmetrische Strahlteilungsprozesse für die Kontrolleingriffe oder als Teil der Kontrolleingriffe für die Materiewelleninterferometriesequenz und/oder der Relaunch-Kontrolleingriffe eingesetzt werden.

Gemäß einer vorteilhaften Ausgestaltung der Erfindung ist vorgesehen, dass zwei voneinander getrennte Ensembles von Atomen in separaten, voneinander beabstandet angeordneten Atomfallen gefangen sind, wobei mit Hilfe der getrennten Ensembles von Atomen zwei voneinander separate, teilweise oder vollständig überlappende Interferometer gebildet werden, wobei die getrennten Ensembles von Atomen in voneinander abgewandten oder teilweise voneinander abgewandten Richtungen bewegt werden, die jeweils eine räumliche Komponente in der x-y-Ebene haben, wobei die zuvor genannten Schritte a) bis d) auf die jeweiligen getrennten Ensembles von Atomen angewandt werden. Hierdurch wird eine vorteilhafte Alternative gegenüber der Aufteilung des wenigstens einen Ensembles in die zuvor erwähnten wenigstens zwei Teilaufenthaltswahrscheinlichkeiten geschaffen, indem das Verfahren zwei voneinander beabstandete Atomfallen und darin voreinander getrennte, gefangene Ensembles von Atomen nutzt. In diesem Fall ist der zuvor erwähnte kohärente Strahlteiler-Kontrolleingriff zum Aufteilen in die wenigstens zwei Teilaufenthaltswahrscheinlichkeiten entbehrlich.

Gemäß einer vorteilhaften Ausgestaltung der Erfindung ist vorgesehen, dass die kohärenten Kontrolleingriffe der Materiewelleninterferometriesequenz vor oder nach dem kohärenten Relaunch-Kontrolleingriff auf das wenigstens eine Ensemble von Atomen im Initialzustand oder in verschiedenen Initialzuständen einwirken. Im Falle von Lichtpulsen als kohärente Kontrolleingriffe können diese z.B. vor oder nach dem Relaunch-Kontrolleingriff auf das Ensemble von Atomen oder die Teilaufenthaltswahrscheinlichkeiten abgestrahlt werden. Dies ermöglicht große Freiheitsgrade bei der praktischen Realisierung eines Atominterferometers.

Gemäß einer vorteilhaften Ausgestaltung der Erfindung ist vorgesehen, dass durch Auswertung der Interferometerausgänge Beschleunigungswerte und/oder Rotationswerte in einer, mehreren oder allen Achsen x, y, und z berechnet werden. Auf diese Weise können Beschleunigungswerte und/oder Rotationswerte in einer, mehreren oder allen Richtungen des 3D-Raums bestimmt werden.

Die eingangs genannte Aufgabe wird außerdem gelöst durch ein Atominterferometer mit wenigstens einer Atomfalle und wenigstens einer steuerbaren kohärenten Signalquelle zur Abgabe von kohärenten Kontrolleingriffen der Materiewelleninterferometriesequenz, kohärenten Strahlteiler-Kontrolleingriffen, kohärenten Ablenk-Kontrolleingriffen und/oder kohärenten Relaunch-Kontrolleingriffen, und mit wenigstens einer Steuereinrichtung zur Steuerung wenigstens der wenigstens einen kohärenten Signalquelle, wobei die Steuereinrichtung zur Ausführung eines Verfahrens der zuvor erläuterten Art eingerichtet ist. Auch hierdurch können die zuvor erläuterten Vorteile realisiert werden. Die verschiedenen Arten der zuvor genannten Kontrolleingriffe können von einer einzigen kohärenten Signalquelle oder von verschiedenen kohärenten Signalquellen abgegeben werden. Dabei kann die Steuereinrichtung vorteilhaft als rechnergesteuerte Steuereinrichtung ausgebildet sein, die zur Ausführung eines Computerprogramms eingerichtet ist. Auf diese Weise kann das Atominterferometer durch entsprechende Programmierung des Computerprogramms hinsichtlich der Funktionalität gestaltet werden, insbesondere indem es mittels des Computerprogramms zur Ausführung eines Verfahrens der zuvor beschriebenen Art ausgebildet wird.

Die eingangs genannte Aufgabe wird außerdem gelöst durch ein Computerprogrammprodukt umfassend Befehle, die bewirken, dass das Atominterferometer der zuvor beschriebenen Art die Verfahrensschritte der zuvor beschriebenen Art ausführt, wenn das Computerprogramm auf einem Rechner der Steuereinrichtung des Atominterferometers ausgeführt wird. Auch hierdurch können die zuvor erläuterten Vorteile realisiert werden. Das Computerprogramm kann auf einem Speichermedium gespeichert sein. Das Computerprogramm kann als Software, Firmware oder Hardwareprogrammierung eines PLD (programmable logic device) oder als Kombination daraus ausgeführt sein.

Die Erfindung eignet sich z.B. für Anwendungen im Bereich der Navigation, für Rotations- und Beschleunigungsmessungen, z.B. als Teil einer inertialen Quantenmesseinheit zur Unterstützung oder an Stelle konventioneller inertialen Messeinheiten, insbesondere in Bereichen ohne verlässliches globales Navigationssystem (GNSS).

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°).

Soweit ein Rechner erwähnt ist, kann dieser dazu eingerichtet sein, ein Computerprogramm, z.B. im Sinne von Software, auszuführen. Der Rechner kann als handelsüblicher Computer ausgebildet sein, z.B. als PC, Laptop, Notebook, Tablet oder Smartphone, oder als Mikroprozessor, Mikrocontroller oder PLD (programmable logic device), oder als Kombination aus solchen Elementen.

Die Erfindung beinhaltet die Möglichkeit der folgenden Eigenschaften:
1. Durch Anwendung der Mehrschleifengeometrie für Rotationsmessungen kann der Gegenstand dieser Erfindung in erdgebundenem Einsatz die dritte Raumachse bzw. Rotationskomponente vermessen.
2. Gegenüber bestehenden Konzepten mit freifallenden Atomen, die bereits diese dritte Raumachse komplementär vermessen können, bietet der Gegenstand dieser Erfindung die Möglichkeit zur Implementierung einer Mehrschleifengeometrie, also einer zusätzlichen Möglichkeit, den Skalierungsfaktor anzupassen und zu erhöhen, ohne dass ein größeres Vakuumsystem benötigt wird.
3. Die Erfindung kann auch in Schwerelosigkeit eingesetzt werden und hier alle drei Rotationsachsen vermessen.
4. Im Unterschied zu bestehenden Konzepten mit freifallenden Atomen, die bereits alle drei Raumachsen ohne mehrere Schleifen vermessen könnten, bietet der Gegenstand dieser Erfindung die Möglichkeit zur Implementierung einer Mehrschleifengeometrie, also einer zusätzlichen Möglichkeit, den Skalierungsfaktor anzupassen und zu erhöhen, ohne dass ein größeres Vakuumsystem benötigt wird.

Die Erfindung wird nachfolgend anhand von Ausführungsbeispielen unter Verwendung von Zeichnungen näher erläutert.

Es zeigen:
- Figur 1: ein Atominterferometer in schematischer Darstellung in der x-z-Ebene,
- Figur 2: das Atominterferometer gemäß Figur 1 in der x-y-Ebene,
- Figur 3: eine Materiewelleninterferometriesequenz in der x-z-Ebene,
- Figur 4: die Materiewelleninterferometriesequenz gemäß Figur 3 in der x-y-Ebene,
- Figur 5: eine Materiewelleninterferometriesequenz mit symmetrisierter Strahlteilung in einem Einzeldurchlauf,
- Figur 6: eine Materiewelleninterferometriesequenz mit symmetrisierter Strahlteilung in einer Mehrschleifen-Geometrie.

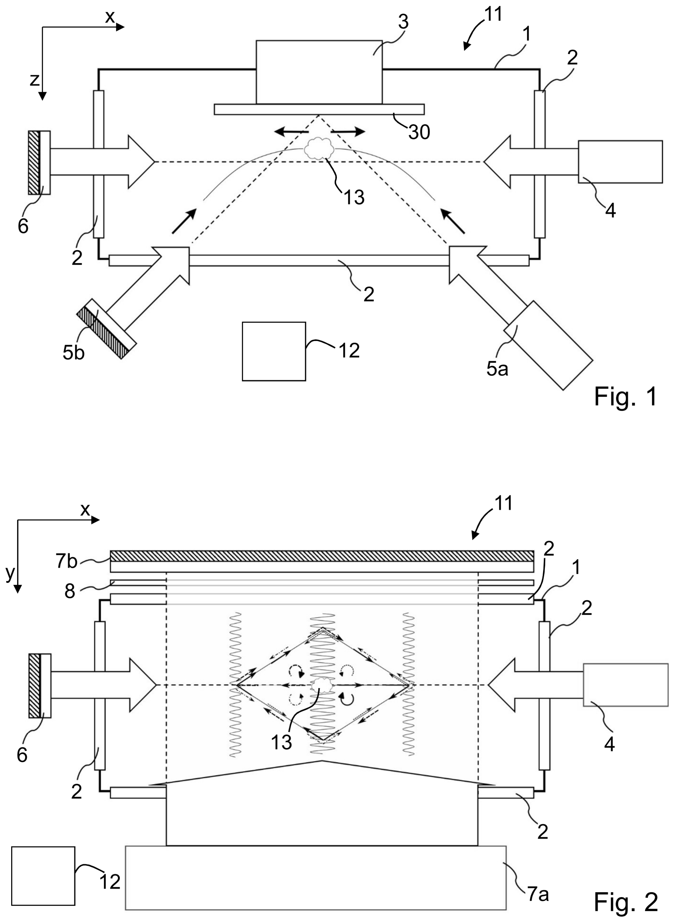

Die Figuren 1 und 2 zeigen ein Atominterferometer 11 in vereinfachter schematischer Darstellung, insbesondere in Hinblick auf die Optik-Implementierung in einem Sensorkopf. Das Atominterferometer 11 hat eine Vakuumkammer 1, die an mehreren Seiten optisch transparente Sichtfenster 2 hat. Die Vakuumkammer 1 kann z.B. eine kubische Form haben. Das Atominterferometer 11 hat außerdem eine Atomfalle 3, z.B. einen Atomchiphalter mit einem Atomchip 30, z.B. mit einer hochreflektierenden Oberfläche. Alternativ kann das Atominterferometer 11 auch eine andere Art von Atomfalle haben, z.B. eine optische Dipolfalle oder eine magnetooptische Atomfalle (MOT magnet-optical trap). Im Falle einer optischen Dipolfalle können die Sichtfenster 2 auch durchlässig für optische Dipolfallen-Laserstrahlen und hochreflektierend für Relaunch-Laserstrahlen oder sonstige kohärente Kontrolleingriffe sein.

Das Atominterferometer 11 hat ferner eine Strahlformungsoptik 4, z.B. für den initialen Impulsübertrag für den Übergang des in der Atomfalle 3 gefangenen Ensembles von Atomen 13 in den Startzustand und ggf. für weitere kohärente Kontrolleingriffe. Das Atominterferometer 11 hat außerdem einen Spiegel 6, der der Strahlformungsoptik 4 diametral gegenüberliegend angeordnet ist. Die Strahlformungsoptik 4 kann z.B. einen oder mehrere Kollimatoren und/oder Flat-Top- oder Top-Hat-Strahlformer umfassen. Ferner hat das Atominterferometer 11 eine schräg zur Atomfalle 3 angeordnete Strahlformungsoptik 5a und einen damit zusammenwirkenden Spiegel 5b, durch den die Strahlen der Strahlformungsoptik 5a reflektiert werden. Die Strahlformungsoptik 5a dient für die Abgabe der Relaunch-Laserstrahlen bzw. allgemein für die kohärenten Relaunch-Kontrolleingriffe.

Die Strahlformungsoptik 5a und/oder der Spiegel 5b können fest justiert sein oder einstellbar sein. Sie können auch motorisiert einstellbar sein, um beispielsweise den Winkel von kohärenten Relaunch-Kontrolleingriffen einstellen zu können. Das Atominterferometer 11 hat ferner übliche bekannte Elemente solcher Atominterferometer, die zur Vereinfachung nicht eingezeichnet sind, wie z.B. Spulen, eine 2D-magnetooptische Falle.

Das Atominterferometer 11 hat außerdem eine Strahlformungsoptik 7a für die Einspeisung der kohärenten Kontrolleingriffe der Materiewelleninterferometriesequenz. In Strahlrichtung der Strahlformungsoptik 7 gegenüberliegend ist ein Spiegel 7b angeordnet. Vor dem Spiegel 7b kann eine Verzögerungsplatte 8 angeordnet sein, die je nach Strahlteilerkonzept notwendig oder nicht notwendig ist. Der Spiegel 7b und/oder der Spiegel 6 kann wahlweise innerhalb oder außerhalb der Vakuumkammer 1 angeordnet sein.

Das Atominterferometer 11 kann außerdem eine Strahlformungsoptik 8 für die Einspeisung von Detektionslicht (für eine Absorptionsaufnahme) in die Vakuumkammer 1 sowie wenigstens eine Kamera für die Detektion der Interferometerausgänge, z.B. eine CCD- oder CMOS-Kamera mit einer vorgeschalteten Detektionsoptik, z.B. ein Doppellinsensystem zur Vergrößerung und/oder Verkleinerung und ggf. zur Streulichtunterdrückung haben, was in den Figuren 1 und 2 nicht eingezeichnet ist. Das Atominterferometer 11 hat eine Steuereinrichtung 12, durch die die einzelnen steuerbaren Komponenten des Atominterferometers 11 gesteuert werden können. Die Steuereinrichtung 12 ist zur Ausführung eines Verfahrens der beschriebenen Art eingerichtet.

Die Erfindung beinhaltet die Möglichkeit der Kombination der folgenden Elemente und Funktionen:
1. ein System für die räumlich aufgelöste Detektion von Atomen, z.B. durch Absorptionsaufnahmen mit einer Kamera, z.B. ein Atominterferometer mit einem Sensorkopf, aufweisend ein Vakuumsystem mit optischen Zugängen, und Peripherieelementen wie z.B. Strahlformungsoptiken, Spulen etc. mit den Funktionalitäten
   1.1. Atome zu fangen und zu Kühlen, z.B. mit einer 3D-magnetooptischen Falle, einer optischen Dipolfalle oder einer Magnetfall bzw. einem Atom-chip, je nach Implementierung in ein- oder mehrfacher Ausführung,
   1.2. in mindestens einer Achse Strahlteileroperationen zur Implementierung des Interferometers durchführen zu können,
   1.3. Atome zu definierten Zeiten und definierten Orten mit definierter Geschwindigkeit und Richtung zurückwerfen zu können,
   1.4. die Interferometerausgänge detektieren zu können.
2. einem Lasersystem zur Bereitstellung des Laserlichts oder einem sonstigen System zur Bereitstellung kohärenter Kontrolleingriffe, z.B. zum Fangen und Kühlen, für die Strahlteileroperationen, je nach Implementierungsansatz für das Zurückwerfen,
3. einem Elektroniksystem einschließlich Steuerungscomputer, z.B. in Form der Steuereinrichtung 12, z.B. für die aktiven Elemente im Sensorkopf und Lasersystem, Ausführen der Messsequenzen, Datenaufnahme und ggf. Prozessierung der Daten,
4. jeweils so ausgelegt, dass sie einen Mehrschleifenbetrieb ermöglichen.

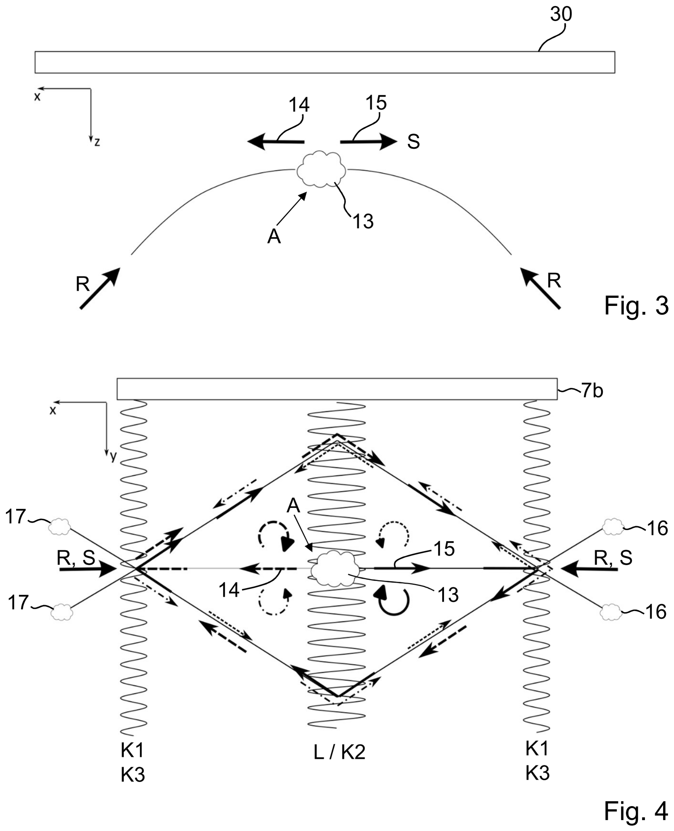

Anhand der Figuren 3 und 4 wird eine erste Ausführungsform eines erfindungsgemäßen Interferometrie-Verfahrens mit einer Materiewelleninterferometriesequenz und einer Mehrschleifen-Geometrie erläutert. Anhand der Figur 3 wird zunächst der Start zweier einzelner Interferometer dargestellt. Einem Ensemble von Atomen 13 wird zunächst an einer Ausgangsposition A, die eine zentrale Stelle in der Vakuumkammer 1 sein kann, ein erster kohärenter Strahlteiler-Kontrolleingriff S aufgeprägt, z.B. im Falle von Lichtpulsen ein erster π/2-Puls. Hierdurch wird das Ensemble von Atomen 13 in zwei Teilaufenthaltswahrscheinlichkeiten 14, 15 der Atome aufgeteilt, was einer Strahlteilung entspricht. Diese Teilaufenthaltswahrscheinlichkeiten 14, 15 bewegen sich mit Geschwindigkeiten -V_{SEP} , V_{SEP} jeweils nach links und rechts, d.h. in positiver und negativer x-Richtung. Ist ein Gravitationseinfluss vorhanden, bewegen sich die Teilaufenthaltswahrscheinlichkeiten 14, 15 zusätzlich in Richtung der Schwerkraft g, d.h. in z-Richtung. Nach einer gewissen Zeit wird auf die jeweiligen Teilaufenthaltswahrscheinlichkeiten 14, 15 ein kohärenter Relaunch-Kontrolleingriff R abgegeben, um einen Zurückwerfprozess der Teilaufenthaltswahrscheinlichkeiten 14, 15 zu erzeugen.

Die Figur 4 zeigt dabei die durch die verschiedenen kohärenten Kontrolleingriffe erzeugten Trajektorien der Teilaufenthaltswahrscheinlichkeiten 14, 15 in der x-y-Ebene. Dabei zeigen die Pfeile mit durchgezogenen und kurzgestrichelten Linien die Trajektorien und Umlaufrichtungen der nach rechts startenden Teilaufenthaltswahrscheinlichkeit 15 und die Pfeile mit strichpunktierten und langgestrichelten Linien die Trajektorien und Umlaufrichtungen der nach links startenden Teilaufenthaltswahrscheinlichkeit 14. Es können dabei mehrere Umläufe der Teilaufenthaltswahrscheinlichkeiten 14, 15 oder allgemein gesagt des wenigstens einen Ensembles von Atomen 13 erzeugt werden, wobei jeweils die dargestellten Trajektorien zurückgelegt werden, die eine Fläche in der x-y-Ebene einschließen, indem mehrfach die kohärenten Relaunch-Kontrolleingriffe R sowie zwischen den Relaunch-Kontrolleingriffen R kohärente Ablenk-Kontrolleingriffe L ausgeführt werden. Der Ablenk-Kontrolleingriff L kann dem Kontrolleingriff K2 entsprechen.

Die kohärenten Kontrolleingriffe der Materiewelleninterferometriesequenz K1, K2 bzw. L und K3 werden dabei zeitlich nacheinander ausgeführt. Zum Ende der Materiewelleninterferometriesequenz wird auf die jeweilige Teilaufenthaltswahrscheinlichkeiten 14, 15 ein dritter kohärenter Kontrolleingriff K3 ausgeübt, z.B. in Form eines zweiten π/2-Pulses. Hiernach kann eine Detektion und Auswertung der Interferometerausgänge 16, 17 der beiden durch die Teilaufenthaltswahrscheinlichkeiten 14, 15 gebildeten Interferometer ausgeführt werden.

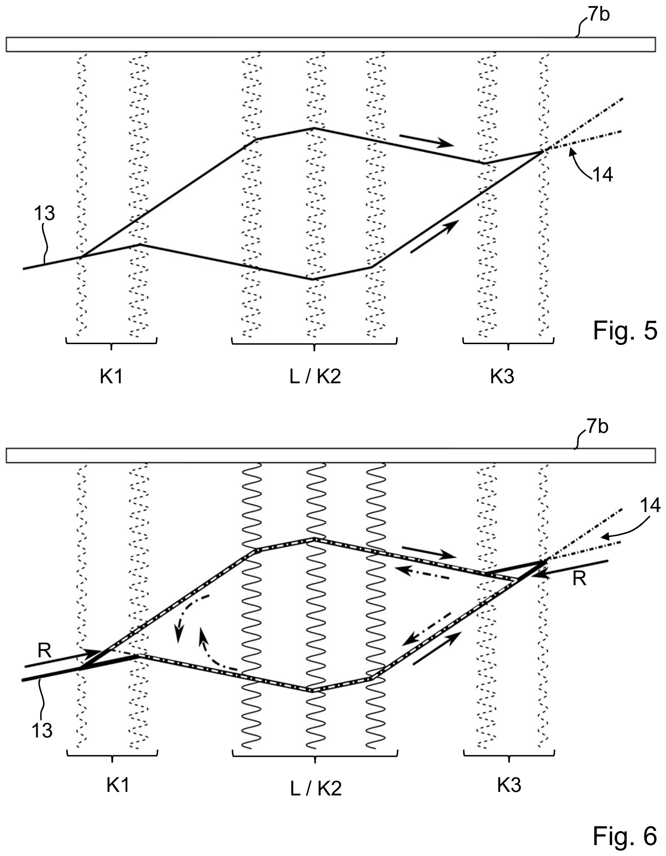

Die Figuren 5 und 6 zeigen eine Implementierung der beschriebenen Mehrschleifen-Geometrie mit symmetrisierter bzw. quasi-symmetrischer Strahlteilung statt der symmetrischen Strahlteilung gemäß den Figuren 3, 4. Eine solche Konfiguration ermöglicht den Betrieb des Atominterferometers 11 bei einer nicht verschwindenden Geschwindigkeit der Atome gegenüber den Strahlteilerlichtfeldern, insbesondere in y-Richtung. Die Figur 5 zeigt einen Einzeldurchlauf einer Interferometriesequenz, wie er im Stand der Technik bekannt ist. Die Figur 6 zeigt eine erfindungsgemäße Ausführungsform in Mehrschleifen-Geometrie, d.h. mit mehreren Hin- und Herbewegungen des wenigstens einen Ensembles von Atomen 13 mit schleifenförmiger Trajektorie in der x-y-Ebene, wie durch die Pfeile analog zur Figur 4 dargestellt wird.

Eine mögliche Implementierung gemäß den Figuren 3 und 4 kann folgendermaßen aussehen:
1. Unter einem Atomchip 3 wird ein ultrakaltes atomares Ensemble, z.B. ein Bose-Einstein-Kondensat, erzeugt. Dieses wird aus der Falle ausgekoppelt und fällt nach unten (z-Richtung) [Figur 3].
2. Ein Strahlteilungsprozess S erzeugt eine Superposition von zwei Impulszuständen (Ensembles 14, 15), die sich mit entgegengesetztem Impuls in x-Richtung senkrecht zur z-Achse auseinanderbewegen [Figur 3].
3. Nach einer Freifallzeit wird durch den Zurückwerfprozess (Relaunch-Kontrolleingriffe R) die Bewegung der beiden Ensembles 14,15 invertiert, so dass sie sich wieder auf einander zu bewegen. Eine exakte Inversion ist nicht notwendig. Dies kann entsprechend einer günstigen Implementierung angepasst werden [Figur 3].
4. Senkrecht zur z-Richtung und x-Richtung (in y-Richtung) werden die Strahlteilerlichtfelder oder sonstigen kohärenten Kontrolleingriffe K1, K2 bzw. L, K3 zum Aufspannen des Interferometers appliziert. Der erste kohärente Kontrolleingriff K1 ist ein sogenannter π/2-Puls, der eine kohärente Superposition zwischen zwei Impulszuständen symmetrisch in y-Richtung erzeugt. Am oder in der Nähe des Apex der Wurfparabel nach einer Zeit T wird ein sogenannter kohärenter Ablenk-Kontrolleingriff L, z.B. ein π-Puls appliziert, der die Impulse der beiden Ensembles 14,15 in y-Richtung invertiert [Figur 4].
5. Nach einer weiteren Freifallzeit T, an oder nahe dem Punkt, an dem die Ensembles 14, 15 das erste Mal zurückgeworfen wurden, werden sie durch Relaunch-Kontrolleingriffe R wieder zurückgeworfen. Sie befinden sich dabei an dem Punkt, an dem vorher das jeweils andere Ensemble 14, 15 zurückgeworfen wurde. Der Zurückwerfzeitpunkt wird dabei so gewählt, dass sich die beiden Trajektorien der Interferometer gerade kreuzen [Figur 4].
6. Am oder in der Nähe des Apex der Wurfparabel nach einer weiteren Freifallzeit T wird ein weiterer kohärenter Ablenk-Kontrolleingriff L, z.B. ein π-Puls appliziert, der die Impulse in y-Richtung invertiert [Figur 4].
7. Nach einer weiteren Freifallzeit T, an oder nahe dem Punkt, an dem die Ensembles 14, 15 das erste Mal zurückgeworfen wurden, dort, wo sich die Trajektorien gerade wieder kreuzen, ergeben sich nun zwei Möglichkeiten [Figur 4]:
   7.1. Durch Applizieren eines kohärenten Kontrolleingriffs K3, z.B. eines π/2-Pulses, wird das Interferometer geschlossen und der Interferometerausgang 16, 17 kann ausgelesen werden. Die Gesamtinterferometerzeit beträgt 4T und es wurden zwei Schleifen auf den Trajektorien durchlaufen.
   7.2. Es findet ein weiterer Zurückwerfprozess durch Relaunch-Kontrolleingriffe R statt, um weitere Schleifen zu durchlaufen, und der abschließende kohärente Kontrolleingriff K3 wird nach einer Gesamtinterferometerzeit von 4T plus einem Vielfachen von 2T appliziert, um das Interferometer zu schließen.

Je nach Implementierung kann die erste und/oder letzte Schleife auch ein anderes 2T haben als die Schleifen dazwischen, z.B. um technischen Restriktionen zu genügen. Alle Arten von kohärenten Kontrolleingriffen, z.B. die π/2- und rr-Pulse, können durch Kompositstrahlteilerpulse (siehe Figur 6), Strahlteilerpulse höherer Ordnung oder anderen Methoden zur Erhöhung des effektiven Wellenvektors ersetzt werden, um zusätzlich den Skalierungsfaktor zu erhöhen. In der genannten Implementierung werden zwei Interferometer parallel betrieben. Dies ermöglicht die Unterdrückung von Vibrationsrauschen (Beschleunigungsrauschen). Prinzipiell ist auch der Betrieb eines Einzelinterferometers möglich, wo das Beschleunigungsrauschen dann auf andere Weise unterdrückt werden muss.

In Mikrogravitation erfolgt das Zurückwerfen nur in x-Richtung.

Möglichkeiten zur technischen Implementierung des Zurückwerfprozesses:
1. Strahlteilungsprozesse, ggf. höherer Ordnung, sequentiell in x- und z-Richtung mit Lichtfeldern, die in x- und z-Richtung eingestrahlt werden; das Zurückwerfen in x-Richtung erfolgt hierbei am Kreuzungspunkt der Trajektorien;
2. Strahlteilungsprozesse, ggf. höherer Ordnung, unter einem bestimmten Winkel, bspw. 45° zur Atomchipoberfläche; das Lichtfeld wird dabei am Atomchip und dann in sich selbst zurückreflektiert; die Strahlführung und der Reflektor können optional so ausgelegt werden, dass eine Winkeländerung möglich ist, z.B. über steuerbare Spiegelhalter.

## Patentansprüche

1. Verfahren zur Steuerung eines Atominterferometers (11), bei dem wenigstens ein Ensemble von Atomen (13) in einem Auskoppelzustand (Z1) präpariert wird, wobei der Auskoppelzustand (Z1) den Zustand nach Kühlverfahren und / oder anderen Präparationsschritten oder allgemein den Zustand vor den nun folgenden Schritten beschreibt, und mittels des wenigstens einen Ensembles von Atomen (13) in einem zum Auskoppelzustand (Z1) gleichen oder nach Anwendung von weiteren Manipulationsschritten verschiedenen Atominterferometereingangszustand durch auf das wenigstens eine Ensemble von Atomen (13) einwirkende kohärente Kontrolleingriffe (K1, K2, K3, L) deren Zustand in von dem Atominterferometereingangszustand verschiedene Folgezustände geändert wird, einschließlich insbesondere kohärenten Superpositionen, und mit dem wenigstens einen Ensemble von Atomen (13) eine Materiewelleninterferometriesequenz durchgeführt wird, **dadurch gekennzeichnet, dass** unter Zugrundelegung eines kartesischen Koordinatensystems mit den Achsen x, y und z, wobei bei Betrieb des Atominterferometers (11) in einem Gravitationsfeld die z-Achse in Wirkrichtung der Gravitation ausgerichtet sein kann, wobei der Betrieb des Atominterferometers (11) auch in Schwerelosigkeit möglich ist, das wenigstens eine Ensemble von Atomen (13) von einer Ausgangsposition (A) in eine erste Richtung bewegt wird, die eine räumliche Komponente in der x-y-Ebene hat, wobei folgende Schritte ausgeführt werden:
a) nach Zurücklegung eines Wegs in der ersten Richtung bis zu einem ersten Umkehrpunkt wird das wenigstens eine Ensemble von Atomen (13) durch Bestrahlung mit wenigstens einem ersten kohärenten Relaunch-Kontrolleingriff (R) mit in einer zur ersten Richtung veränderten zweiten Richtung bewegt, die ebenfalls eine räumliche Komponente in der x-y-Ebene hat, danach werden kohärente Kontrolleingriffe (K1, K2, K3, L) angewendet, wobei die Funktionalität des wenigstens einen kohärenten Relaunch-Kontrolleingriffs (R) mit einem der kohärenten Kontrolleingriffe (K1, K2, K3, L) kombiniert sein kann,
b) nach Zurücklegung eines Wegs in der zweiten Richtung wird das wenigstens eine Ensemble von Atomen (13) durch Bestrahlung mit wenigstens einem zweiten kohärenten Relaunch-Kontrolleingriff (R) in Richtung der Umgebung des ersten Umkehrpunkts bewegt und es werden weitere kohärente Kontrolleingriffe angewendet, sodass das wenigstens eine Ensemble von Atomen (13) eine schleifenförmige Trajektorie in der x-y-Ebene hat,
c) Hin- und Herbewegungen des wenigstens einen Ensembles von Atomen (13) mit schleifenförmiger Trajektorie in der x-y-Ebene werden mittels weiterer kohärenter Relaunch-Kontrolleingriffe (R) wiederholt, bis eine vorgegebene Zahl Hin- und Herbewegungen des wenigstens einen Ensembles von Atomen (13) erreicht ist, wobei auch hier wieder kohärente Kontrolleingriffe zur Ausprägung der schleifenförmigen Trajektorie angewendet werden, wobei aufeinanderfolgende schleifenförmige Trajektorien wahlweise so ausgeprägt sein können, dass sie sich überlagern, nahezu überlagern oder von einer Überlagerung abweichen,
d) Abschließen der Interferometriesequenz durch Bestrahlung des wenigstens einen Ensembles von Atomen (13) mit wenigstens einem abschließenden kohärenten Kontrolleingriff (K1, K2, K3) und Detektion der Interferometerausgänge.

2. Verfahren nach Anspruch 1, **dadurch gekennzeichnet, dass** die kohärenten Superpositionszustände der Atome auf schleifenförmigen Trajektorien eine Fläche umschließen, die eine räumliche Komponente in Richtung der x-Achse und der y-Achse hat.

3. Verfahren nach einem der vorhergehenden Ansprüche, **dadurch gekennzeichnet, dass** die kohärenten Superpositionszustände der Atome auf schleifenförmigen Trajektorien eine Mehrschleifen-Geometrie bilden.

4. Verfahren nach einem der vorhergehenden Ansprüche, **dadurch gekennzeichnet, dass** die kohärenten Superpositionszustände bei den Hin- und Herbewegungen mit wenigstens einem kohärenten Ablenk-Kontrolleingriff (L) bestrahlt werden, dessen Wirkrichtung in einem von Null verschiedenen Winkel, z.B. orthogonal, zur Wirkrichtung der kohärenten Relaunch-Kontrolleingriffe (R) ist.

5. Verfahren nach einem der vorhergehenden Ansprüche, **dadurch gekennzeichnet, dass** die Wirkrichtung der kohärenten Relaunch-Kontrolleingriffe (R) und/oder die Wirkrichtung der kohärenten Ablenk-Kontrolleingriffe (L) wenigstens eine räumliche Komponente in Richtung der x-Achse und/oder der y-Achse hat.

6. Verfahren nach einem der vorhergehenden Ansprüche, **dadurch gekennzeichnet, dass** die kohärenten Superpositionszustände der Atome auf ihrer Bewegung in der ersten und zweiten Raumrichtung nicht ausschließlich geführt sind.

7. Verfahren nach einem der vorhergehenden Ansprüche, **dadurch gekennzeichnet, dass** die Zustände der Atome des wenigstens einen Ensembles von Atomen (13) durch wenigstens einen auf das wenigstens eine Ensemble von Atomen (13) einwirkenden kohärenten Strahlteiler-Kontrolleingriff (S) derart zu einem Transferzustand geändert werden, dass ihr Zustand wenigstens zwei Teilaufenthaltswahrscheinlichkeiten (14, 15) der Atome mit unterschiedlichem Impuls aufweist, wobei die unterschiedlichen Impulse mindestens eine voneinander abgewandte Richtungskomponente aufweisen, die jeweils eine räumliche Komponente in der x-y-Ebene haben, wobei im Anschluss weitere Manipulationsschritte des Anspruchs 1, die Materiewelleninterferometriesequenz des Anspruchs 1 und die Schritte a) bis d) des Anspruchs 1 auf die jeweiligen Teilaufenthaltswahrscheinlichkeiten (14, 15) der Atome angewandt werden.

8. Verfahren nach Anspruch 7, **dadurch gekennzeichnet, dass** eine symmetrische oder symmetrisierte bzw. quasi-symmetrische Strahlteilung des wenigstens einen Ensembles von Atomen (13) in die wenigstens zwei Teilaufenthaltswahrscheinlichketen (14, 15) der Atome in Richtung der x-Achse und der y-Achse durchgeführt wird.

9. Verfahren nach einem der vorhergehenden Ansprüche, **dadurch gekennzeichnet, dass** einer oder mehrere symmetrische oder symmetrisierte oder quasi-symmetrische Strahlteilungsprozesse für wenigstens einen Teil der Kontrolleingriffe (K1, K2, K3, L, R) eingesetzt werden.

10. Verfahren nach einem der vorhergehenden Ansprüche, **dadurch gekennzeichnet, dass** zwei voneinander getrennte Ensembles von Atomen (13) in separaten, voneinander beabstandet angeordneten Atomfallen gefangen sind, wobei mit Hilfe der getrennten Ensembles von Atomen (13) zwei voneinander separate, teilweise oder vollständig überlappende Interferometer gebildet werden, wobei die getrennten Ensembles von Atomen (13) in voneinander abgewandten oder teilweise voneinander abgewandten Richtungen bewegt werden, die jeweils eine räumliche Komponente in der x-y-Ebene haben, wobei im Anschluss die Schritte a) bis d) oder b) bis d) des Anspruchs 1 auf die jeweiligen getrennten Ensembles von Atomen (13) angewandt werden.

11. Atominterferometer (11) mit wenigstens einer Atomfalle (3) und wenigstens einer steuerbaren kohärenten Signalquelle (4, 5, 5a, 5b) zur Abgabe von kohärenten Kontrolleingriffen (K1, K2, K3, L) der Materiewelleninterferometriesequenz einschließlich der kohärenten Ablenk-Kontrolleingriffe (L), kohärenten Strahlteiler-Kontrolleingriffen (S) und/oder kohärenten Relaunch-Kontrolleingriffen (R), und mit wenigstens einer Steuereinrichtung (12) zur Steuerung wenigstens der wenigstens einen kohärenten Signalquelle (4, 5, 5a, 5b), **dadurch gekennzeichnet, dass** die Steuereinrichtung (12) zur Ausführung eines Verfahrens nach einem der vorhergehenden Ansprüche eingerichtet ist.

12. Computerprogramm umfassend Befehle, die bewirken, dass das Atominterferometer nach Anspruch 11 die Verfahrensschritte nach einem der Ansprüche 1 bis 10 ausführt, wenn das Computerprogramm auf einem Rechner der Steuereinrichtung des Atominterferometers ausgeführt wird.
